(19) **Europäisches Patentamt**
**European Patent Office**
**Office européen des brevets**

(11) **EP 2 930 708 A2**

(12) **EUROPÄISCHE PATENTANMELDUNG**

(43) Veröffentlichungstag:
**14.10.2015 Patentblatt 2015/42**

(21) Anmeldenummer: **15150574.0**

(22) Anmeldetag: **09.01.2015**

(51) Int Cl.:
***G09B 21/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **08.04.2014 DE 102014005088**

(71) Anmelder: **Köppern und Eberts UG (haftungsbeschränkt) K+E Vision**
**93138 Lappersdorf (DE)**

(72) Erfinder: **Köppern, Johannes**
**81375 München (DE)**

(74) Vertreter: **Hannke, Christian**
**Hannke Bittner & Partner**
**Patent- und Rechtsanwälte**
**Prüfeninger Strasse 1**
**93049 Regensburg (DE)**

(54) **Lesehilfe und Verfahren zum Helfen des Lesens von Text enthaltenden Dokumenten**

(57) Verfahren zur Erfassung von Text enthaltenden Dokumenten mit den Schritten:
- Aufnehmen wenigstens eines Abschnitts (A) eines zu Er fassenden Dokuments mit einer Bildaufnahmeeinrichtung (2) oder zur-Verfügungstellen wenigstens eines solchen Abschnitts;
- Abspeichern wenigstens einer Datei, welche für den erfassten Abschnitt des Dokuments charakteristisch ist, in einer Speichereinrichtung (4);
- Wiedergabe wenigstens eines Unterabschnitts (UA) des erfassten Abschnitts (A) auf einer Bildwiedergabeeinrichtung (6);
- Bewegen des auf der Bildwiedergabeeinrichtung (6) wiedergegebenen Unterabschnitts (UA) in Reaktion auf eine Eingabe eines Benutzers, derart, dass weitere Unterabschnitte (UA) des erfassten Abschnitts auf der Bildwiedergabeeinrichtung (6) ausgegeben werden, wobei diese Bewegung des Unterabschnitts in Abhängigkeit von einer von dem Benutzer mittels einer Eingabeeinrichtung (8) eingegebenen Relativbewegung gesteuert wird; wobei diese Relativbewegung eine erste Komponente (X) aufweist die sich entlang des zu erfassenden Textes er streckt sowie eine zweite Komponente (Y), welche zu der ersten Komponente senkrecht steht.

Erfindungsgemäß wird wenigstens zeitweise der von der Bildwiedergabeeinrichtung wiedergegebene Unterabschnitt (UA) unabhängig von der zweiten Komponente (Y) der Relativbewegung verschoben.

Fig. 1

**Beschreibung**

Die vorliegende Erfindung bezieht sich auf ein Verfahren zum Erfassen von textenthaltenden Dokumenten. Aus dem Stand der Technik sind zahlreiche Vorrichtungen und Verfahren bekannt, welche das Erfassen von textenthaltenden Dokumenten erleichtern sollen. Dazu gehören einerseits klassische Hilfsmittel wie Lupen, in jüngerer Zeit jedoch auch elektronische Vorrichtungen, welche das Erfassen von Dokumenten erleichtern. Derartige Vorrichtungen und Verfahren sind insbesondere für sehbehinderte Menschen von großer Bedeutung. Üblicherweise wird dabei ein zu lesender Text stark vergrößert und dieser vergrößerte Abschnitt kann von dem Benutzer auch bei Bestehen von Sehschwächen leichter erfasst werden. Der Nachteil derartiger Vorrichtungen besteht jedoch darin, dass bei den jeweiligen Wiedergabemitteln, wie beispielsweise Monitoren, nur begrenzt Anzeigeplatz zur Verfügung steht und daher immer nur begrenzte Textausschnitte wiedergegeben werden können. Daher gestaltet sich das Erfassen derartiger Texte für den Benutzer oftmals aufwendig, insbesondere, da er oftmals Zeilen wechseln muss und von bestimmten Punkten in einem Dokument zu anderen Punkten (insbesondere von einem Zeilenende zu dem nächsten Zeilenanfang) springen muss.

Der vorliegenden Erfindung liegt die Aufgabe zugrunde, dass ein Benutzer, insbesondere ein sehbehinderter Anwender bei der Aufnahme von Informationen in einem Dokument unterstützt werden soll. Diese Information kann dabei als Textform im weitesten Sinne repräsentiert sein. Bei dieser Textform kann es sich um Text im engeren Sinne handeln, das heißt in Zeilen dargestellten Text. Es kann sich jedoch auch um Text im übertragenden Sinne, beispielsweise in Form von Tabellen oder dergleichen handeln.

Diese Aufgaben werden erfindungsgemäß durch ein Verfahren und eine Vorrichtung nach den unabhängigen Ansprüchen erreicht. Vorteilhafte Ausführungsformen und Weiterbildungen sind Gegenstand der Unteransprüche.

Bei einem erfindungsgemäßen Verfahren zur Erfassung von textenthaltenden Dokumenten wird zunächst wenigstens ein Abschnitt eines zu erfassenden Dokumentes mit einer Bildaufnahmeeinrichtung erfasst bzw. aufgenommen. Dabei handelt es sich insbesondere um eine Bildaufnahmeeinrichtung, die zur ortsaufgelösten Aufnahme des jeweiligen Dokuments geeignet ist.

In einem weiteren Verfahrensschritt werden Daten abgespeichert, welche für den erfassten Abschnitt des Dokuments charakteristisch sind. Diese Daten können dabei in Form einer Datenzusammenstellung wie etwa einer Datei abgespeichert werden, es wäre jedoch auch möglich, dass einzelne Daten oder Datengruppen abgespeichert werden. Dabei wäre sowohl eine permanente als auch eine flüchtige Speicherung denkbar. Dieses Abspeichern erfolgt dabei vorteilhaft in einer Speichereinrichtung. Besonders bevorzugt kann dabei eine Datei abgelegt werden (beispielsweise eine PDF-Datei), welche das besagte Dokument wiedergeben kann bzw. mit deren Hilfe das Dokument wiedergegeben werden kann. Vorteilhaft handelt es sich dabei um Daten, beispielsweise eine Datei, die mit herkömmlichen Datenverarbeitungsgeräten bzw. auch herkömmlichen Datenverarbeitungsprogrammen wiedergebbar ist.

Bei einem weiteren Verfahrensschritt wird wenigstens ein Abschnitt bzw. ein Unterabschnitt des erfassten Abschnitts auf einer Bildwiedergabeeinrichtung wiedergegeben. Bei dieser Bildwiedergabeeinrichtung kann es sich beispielsweise um einen Monitor, aber jedoch um ein tragbares Gerät, wie beispielsweise ein Smartphone oder dergleichen, handeln.

Bei einem weiteren Verfahrensschritt wird der auf der Bildwiedergabeeinrichtung wiedergegebene Unterabschnitt in Reaktion auf eine Eingabe des Benutzers derart bewegt, dass weitere Unterabschnitte des erfassten Abschnitts auf der Bildwiedergabeeinrichtung ausgegeben werden.

Dabei wird diese Bewegung des Unterabschnitts in Abhängigkeit von einer von dem Benutzer mittels einer Eingabeeinrichtung eingegebenen Relativbewegung gesteuert; wobei diese Relativbewegung eine erste Komponente aufweist die sich entlang des zu erfassenden Textes erstreckt sowie eine zweite Komponente, welche zu der ersten Komponente senkrecht steht.

Erfindungsgemäß wird wenigstens zeitweise der von der Bildwiedergabeeinrichtung wiedergegebene Unterabschnitt unabhängig von zumindest der zweiten Komponente der Relativbewegung verschoben und/oder wird von dieser zweiten Komponente der Relativbewegung zumindest teilweise entkoppelt.

Dabei ist es denkbar, dass eine vollständige Entkopplung bzw. unabhängig-Machung der Bewegungen erfolgt. Es wäre jedoch auch möglich, dass Bewegungen in der zweiten Komponente (d.h. mit einer Bewegungskomponente in der zweiten Richtung) in einem vorgegebenen Toleranzkorridor zugelassen werden, darüber hinaus jedoch nicht. Damit wird unter dem Begriff der Entkopplung insbesondere verstanden, dass die wiedergegebene Bewegung nicht mehr oder nicht mehr unmittelbar der mit dem Eingabemittel vorgegebenen Bewegung folgt also zumindest nicht mehr vollständig an diese Bewegung gekoppelt ist. Zusätzlich wäre es auch möglich, dass zumindest zeitweise auch eine Entkopplung von der ersten Komponente der Bewegung erfolgt. Zusätzlich, wäre es auch möglich, dass zeitweise nur eine Entkopplung von der ersten Komponente vorgenommen.

Als Ausgestaltung für diese Entkopplung bieten sich mehrere Möglichkeiten an. So könnte beispielsweise eine harte bzw. feste Kopplung an eine bestimmte Informationszeile vorgenommen werden (und damit eine vollständige Entkopplung von der Bewegung in der zweiten Komponente). Bei dieser Art der Kopplung werden Bewegungen in der bzw. mit der zweiten Komponente völlig ignoriert bzw. nur eine Bewegung in der ersten Richtung bzw. in der ersten Komponente zugelassen. Diese harte Kopplung könnte beispielsweise mechanisch in der Weise vorgenommen werden, dass Bewegungen in der zweiten Komponente des Eingabemittels unterdrückt bzw. blockiert werden. Daneben ist jedoch auch eine elektronische bzw. softwareseitige Blockierung möglich.

Daneben wäre es auch möglich, dass eine harte bzw. feste Kopplung mit einem vorbestimmten Toleranzkorridor vorgesehen ist. Bei dieser Vorgehensweise wird auch eine Bewegung in der zweiten Komponente in bestimmten Grenzen zugelassen. Falls jedoch eine Bewegung über diesen Toleranzkorridor hinaus erfolgt, wird diese nicht mehr ausgeführt bzw. ignoriert. Vorteilhaft ist dabei dieser Toleranzkorridor einstellbar bzw. durch den Benutzer vorgebbar. So könnte beispielsweise bei dem Lesen einer bestimmten Zeile auch eine Darstellung der vorhergehenden und/oder nachfolgenden Zeile ermöglicht sein.

Bevorzugt wird wenigstens zeitweise eine Rückholung zu einer vorgegebenen Position des Dokuments vorgenommen.

So ist es möglich, dass eine Leseposition des Benutzers erfasst wird, beispielsweise aus der Bewegung des Eingabemittels in der Zeilenrichtung. Zu dieser Leseposition, bei der es sich dann um die oben erwähnte vorgegebene Position handelt, kann dann unter vorgegebenen Bedingungen zurückgekehrt werden.

Bevorzugt sind diese Bedingungen aus einer Gruppe von Bedingungen ausgewählt, welche eine Eingabe des Benutzers, einen bestimmten Zeitpunkt, eine bestimmte Zeitspanne oder auch eine bestimmte Position oder Bewegung des Eingabemittels enthält.

Dabei wäre es möglich, dass auf eine Eingabe des Benutzers hin, etwa mittels des Eingabemittels, zu der vorgegebenen Leseposition zurückgekehrt wird. Auch wäre es möglich, dass nach dem Verweilen einer bestimmten Zeit an einer bestimmten Position automatisch wieder zu der vorgegebenen Position zurückgekehrt wird. Daneben wäre es auch möglich, dass zu der vorgegebenen Position zurückgekehrt wird, wenn die Bewegung des Eingabemittels den oben erwähnten Korridor verlässt.

Anstelle der oben beschriebenen harten Kopplung könnte auch eine weiche Kopplung vorgenommen werden, in der Bewegungen des Eingabemittels in der zweiten Komponente in einem bestimmten reduzierten Maß übernommen und entsprechend wiedergegeben werden. Auch im Hinblick auf diese weiche Kopplung könnte wieder der oben beschriebene Toleranzkorridor zugelassen werden. Daneben könnte auch eine weiche Kopplung mit einer harten Kopplung kombiniert werden, etwa, in dem innerhalb eines ersten Toleranzkorridors eine weiche Kopplung vorgenommen wird, und außerhalb des ersten Toleranzkorridors jedoch noch innerhalb eines zweiten, größeren Toleranzkorridors eine harte Kopplung vorgenommen wird.

Daneben ist es auch möglich, dass unter vorgegebenen Bedingungen Zeilensprünge zugelassen werden, etwa auf eine Benutzereingabe hin oder wenn das Erreichen des Endes einer bestimmten Zeile erkannt wird. Bevorzugt wird ein angezeigter Bildausschnitt zusammen mit dem Informationsfluss verschoben. Bevorzugt kann auch ein Zurückführen an eine letzte Leseposition vorgenommen werden.

Bevorzugt wird wenigstens zeitweise der von der Bildwiedergabeeinrichtung wiedergegebene Bildabschnitt unabhängig von einer Richtung der Relativbewegung der Eingabeeinrichtung nur in einer ersten geraden Richtung verschoben.

Bereits aus dem Stand der Technik sind Verfahren bekannt, bei denen mit Eingabeeinrichtungen, wie beispielsweise einer Computermaus, einem Mauspad oder einem Touchpad, der gerade beobachtete Text auf dem Computer oder einem Bildschirm weiter verschoben werden kann. Dabei sind die Bewegungen des Benutzers oft nicht genau geradlinig bzw. horizontal, sodass sich auch der wiedergegebene Abschnitt nicht nur in der gewünschten Leserichtung, sondern auch in anderen Richtungen verschiebt. Dies ist für den Benutzer sehr umständlich.

Die Erfindung schlägt daher vor, dass zumindest zeitweise eine Bewegung bzw. Verschiebung des jeweiligen Unterabschnitts des zu erfassenden Dokumentes nur in einer bestimmten Richtung verschoben wird (evtl. zuzügliche eines Toleranzbereichs in einer hierzu senkrechten Richtung, beispielsweise in einer horizontalen Richtung. Damit kann, selbst wenn die Eingabeeinrichtung falsch betätigt wird, beispielsweise schräg oder in gekrümmten Linien verschoben wird, der Text nur in einer bestimmten Richtung weiter verschoben werden. Mit anderen Worten kann die Bewegung des Benutzers in der zu der Richtung der Texterfassung senkrechten Richtung zumindest teilweise ignoriert werden, oder es werden nur bestimmte Verschiebungen des wiedergegebenen Bereichs in einer senkrecht zu der Erfassungsrichtung stehenden Richtung zu gelassen, etwa in einem Bereich von wenigen cm um eine zu erfassende Textzeile. Bei der Richtung des zu erfassenden Textes handelt es sich insbesondere um diejenige Richtung, in der ein Text gelesen wird, insbesondere die Richtung einer Textzeile. Denkbar wäre es dabei auch, dass die besagte zweite Richtung mechanisch gesperrt wird, etwa durch eine entsprechende Blockierung der Eingabeeinrichtung. Auch wäre es möglich, dass eine eindimensionale Eingabe dadurch erreicht wird, dass sich das Eingabemittel nur eindimensional bedienen lässt, wie etwa das sog. Mausrad einer Computer - Maus.

Auf diese Weise kann erreicht werden, dass der Benutzer, selbst wenn er die Eingabeeinrichtung nicht zutreffend bedient, leicht einer bestimmten Textinformation, insbesondere den Zeilen bei der Informationsaufnahme folgen kann. Es wird darauf hingewiesen, dass es sich bei den beiden Richtungen, die im Folgenden auch mit X und Y bezeichnet werden, nicht um die typischen Koordinaten eines kartesischen Koordinatensystems handeln muss. Vielmehr handelt es sich bei der ersten Richtung bzw. der ersten Komponente um eine Komponente oder Richtung, welche durch den Textfluss bzw. die Abfolge der Textzeichen vorgegeben wird, etwa den Verlauf einer Textzeile. Diese Richtung könnte dabei auch gekrümmt sein, insbesondere wenn ein entsprechender Text sich entlang einer gekrümmten Linie erstreckt. Bevorzugt steht jedoch die zweite Richtung bzw. die zweite Komponente senkrecht zu dieser ersten Richtung.

Zusätzlich oder alternativ zu der oben erfindungsgemäß vorgeschlagenen Vorgehensweise, bei welcher der wiedergegebene Unterabschnitt unabhängig von der zweiten Komponente der Relativbewegung verschoben wird, ist es auch denkbar, dass Markierungen definiert bzw. erzeugt werden, welche gemeinsam mit dem Text mittels der Wiedergabeeinrichtung ausgegeben werden, wobei die Positionen dieser Markierungen gegenüber dem eingelesenen bzw. abgespeicherten Text bevorzugt festgelegt werden und diese Relativposition unverändert bleiben. Damit wird insbesondere bei einer Verschiebung des dargestellten Unterabschnitts auch die jeweilige Markierung in gleicher Weise wie der Text selbst verschoben.

Vorteilhaft ist hier die Markierung aus einer Gruppe von Markierungen ausgewählt, welche Zeilen, Pfeile und dergleichen enthält. Vorteilhaft kann beispielsweise eine derartige Zeile unterhalb des gerade wiedergegebenen Textes dargestellt werden.

Unter einer Markierung kann es sich jedoch auch um eine Hervorhebung bestimmter Textpassagen handeln. So kann beispielsweise eine gerade zu lesende Textzeile gegenüber benachbarten Zeilen hervorgehoben werden, was sowohl dadurch geschehen kann dass die betreffende Zeile hervorgehoben wird als auch dadurch, dass die benachbarten Zeilen anders, etwa blasser oder schwächer dargestellt werden. Die Anmelder behalten sich vor, auch für eine derartige Vorgehensweise Schutz zu beanspruchen.

Bevorzugt kann die Hervorhebung auch einen gerade gelesenen oder zu lesenden Textabschnitt anzeigen. So kann die Hervorhebung mit dem Lesen des Textes mitlaufen. Falls also beispielsweise der Benutzer gerade beim Lesen in der Mitte einer Zeile angelangt ist, können beispielsweise die bereits gelesenen Textpassagen und/oder die noch zu lesenden Textpassagen in dieser Zeile hervorgehoben werden. Damit ist es bevorzugt möglich, dem Benutzer den Fortschritt des Lesens innerhalb einer Zeile, d.h. auf Zeichen-, Wort oder Längenebene anzuzeigen.

So ist es beispielsweise möglich, dass die aktuell gelesene Zeile markiert wird, etwa durch farbliche Hervorhebung. Daneben wäre es zusätzlich möglich, eine aktuelle Zeile durch ein Markierungsmittel, wie insbesondere aber nicht ausschließlich eine Linie zu markieren.

Bevorzugt ist daher eine Erkennungseinrichtung vorgesehen, welche den gerade erfassten Text erkennt und welche bevorzugt auch ein Fortschreiten des Lesestatus erkennt.

Weiterhin ist es auch möglich, dass eine entsprechende Markierung während eines vorbestimmten und bevorzugt auch einstellbaren Zeitraums aufrechterhalten wird. Dabei kann dieser Zeitraum auch von einer Lesegeschwindigkeit bzw. einer Bewegungsgeschwindigkeit des Eingabemittels abhängen. Die Markierung bzw. Hervorhebung kann bevorzugt gleichsam mit dem Leser bzw. dem gelesenen Abschnitt des Textes mitwandern. Auch ist es möglich, dass die Hervorhebung bei einer Lesepause ebenfalls in einer bestimmten Position verbleibt. Daneben wäre es auch möglich, dass die Markierung (zeitweise) abgespeichert wird und beispielsweise bei einem Neustart der Vorrichtung dem Nutzer das Auffinden derjenigen Stelle, an der das Lesen unterbrochen wurde, erleichtert. Damit kann die Markierung auch die Funktion eines "digitalen Bucheinmerkers" wahrnehmen.

Die Erfindung schlägt damit ein mehrstufiges Verfahren vor, bei dem zunächst der Text eingelesen wird und anschließend dieser eingelesene Text in der oben dargelegten Weise wiedergegeben wird.

Bevorzugt ist eine Verschiebung des Textabschnittes an eine Relativbewegung bzw. eine Betätigung der Eingabeeinrichtung gekoppelt.

Dabei ist es denkbar, dass als Eingabeeinrichtung eine Maus verwendet wird, welche tatsächlich gegenüber einem Untergrund verschoben wird. Es wäre jedoch auch möglich, dass es sich bei dem Eingabemittel beispielsweise um ein touchpadartiges oder ein mauspadartiges System handelt, bei dem der Benutzer mit einem Finger entlang einer Fläche fährt. Damit ist es möglich, dass die Bewegung des Bildabschnitts immer genau entlang einer Zeile geführt wird, unabhängig davon, welche tatsächliche Bewegung der Benutzer genau ausführt.

Vorzugsweise wird wenigstens zeitweise der von der Bildwiedergabeeinrichtung wiedergegebene Unterabschnitt im Wesentlichen ausschließlich entlang des zu erfassenden Textes verschoben. Unter im Wesentlichen ausschließlich wird hierbei verstanden, dass ggfs. auch gewisse Toleranzen in anderen Richtungen also insbesondere senkrecht zu dem Verlauf einer Textzeile zugelassen sein können, über diese Toleranzen jedoch hinausgehende Bewegungen unterdrückt bzw. ignoriert werden.

Vorteilhaft ist jedoch die Verschiebung des Textabschnittes auf der Bildaufnahmeeinrichtung in einer vorgegebenen Weise an die Betätigung der Eingabeeinrichtung gekoppelt.

Bei einem weiteren vorteilhaften Verfahren wird der von der Bildwiedergabeeinrichtung wiedergegebene Unterabschnitt innerhalb eines rechteckigen Bereichs verschoben, dessen lange Seite sich in Richtung des zu erfassenden Textes erstreckt. So kann beispielsweise ein (fiktives) Rechteck definiert werden, welches eine oder mehrere Zeilen eines Textes enthält und dessen lange Seite sich entlang dieser Zeilen erstreckt. Dieses Rechteck kann auch den für den Benutzer sichtbaren Bereich des Textes definieren. Die kurze Seite dieses Rechtecks kann dabei den Toleranzbereich definieren, in dem der Benutzer bzw. dessen Eingabe mit der Eingabeeinrichtung von der Zeile abweicht. Der dargestellte Unterabschnitt bzw. der dargestellte Bereich kann damit im Wesentlichen entlang einer Textzeile verschoben werden.

Es wäre dabei möglich, ein gesamtes zu erfassendes Dokument zu erfassen, es wäre jedoch auch möglich, dass die Bildaufnahmeeinrichtung lediglich einen Abschnitt des Dokuments erfasst, insbesondere einen Abschnitt, der später gelesen werden soll. Bevorzugt wird jedoch ein gesamtes zu lesendes Dokument bzw. eine ganze Seite eines Dokuments von der Bildaufnahmeeinrichtung erfasst.

Bei der Bildaufnahmeeinrichtung kann es sich beispielsweise um einen Scanner oder eine Digitalkamera handeln. Dieses so erfasste bzw. aufgenommene Bild wird, wie oben erwähnt, in einer Speichereinrichtung abgelegt. Dabei wäre es auch denkbar, dass eine mechanische Vorrichtung vorgesehen ist, welche nur einen Teilausschnitt einer Vorlage bzw. eines zu erfassenden Dokumentes in hoher Auflösung erfasst und mittels einer Prozessoreinrichtung über diese Vorlage bewegt werden kann. Auch auf diese Weise ist es möglich, ein entsprechendes Textdokument vollständig zu erfassen.

Bei einem bevorzugten Verfahren handelt es sich bei der geraden Richtung um eine horizontale Richtung. So wäre es denkbar, dass die Bewegung des Bildabschnittes in einer horizontalen Richtung erfolgt, insbesondere entlang von Zeilen eines Dokuments. Es wird dabei festgehalten, dass es sich bei der Bewegungsrichtung auch um eine im Wesentlichen horizontale Richtung handeln kann, etwa, wenn das Dokument versehentlich nicht ganz gerade, sondern etwas schief eingelesen wurde.

Vorteilhaft handelt es sich bei der geraden Richtung um eine Richtung, welche sich entlang eines Informationsgehalts des zu erfassenden Dokuments erstreckt, beispielsweise entlang einer Textzeile. Auch wäre es denkbar, dass es sich bei der geraden Richtung auch zeitweise um eine vertikale Richtung handelt, etwa wenn Text in einer vertikalen Richtung dargestellt wird, wie beispielsweise bei anderen Schriftgattungen, oder auch etwa bei Diagrammbeschriftungen.

Bei einem weiteren bevorzugten Verfahren ergibt sich die Bewegung des Bildabschnitts in der geraden Richtung aus einer Komponente der mittels der Eingabeeinrichtung erzeugten Bewegungen dieser Komponente. Bei dem Führen einer Maus kann es sich dabei um die tatsächliche Bewegungsrichtung dieser Maus handeln, bei Verwendung eines Touchpads beispielsweise um die Bewegungsrichtung eines Fingers auf diesem Touchpad. Diese Bewegung kann dabei auch andere Verläufe annehmen, wie beispielsweise gekrümmte Verläufe oder schräge Verläufe, zur Ermittlung der Verschiebung des Bildes wird jedoch bevorzugt diejenige Komponente dieser Bewegung herangezogen, welche sich in der besagten geradlinigen Richtung ergibt.

Dabei wäre es möglich, dass die Relativbewegung in der besagten Richtung und auch in der Gegenrichtung bzw. in der entgegengesetzten Richtung möglich ist, um beispielsweise das wiederholte Lesen der gleichen Passage zu ermöglichen. Vorteilhaft bestimmt bzw. ermittelt eine Prozessoreinrichtung wenigstens eine Textzeile des erfassten Abschnitts. Bevorzugt wird die mittels der Eingabeeinrichtung eingegebene Bewegung analysiert und für die Verschiebung nur eine Komponente dieser Bewegung berücksichtigt, welche sich entlang der textlichen Information, etwa einer Textzeile erstreckt.

Es wird dabei darauf hingewiesen, dass es sich bei dem Text nicht notwendigerweise um lateinische Schrift handeln kann, sondern auch andere Schriftgattungen, wie beispielsweise arabische, japanische oder chinesische Schriften in Betracht kommen. Die besagte Prozessoreinrichtung analysiert das eingelesene Dokument und ermittelt auf diese Weise Details dieses Dokuments, wie insbesondere Textzeilen. Anhand der Ermittlung dieser Textzeilen kann das Führen des Benutzers bzw. des Eingabemittels verbessert bzw. erreicht werden.

Vorteilhaft werden wenigstens einem Textelement des zu erfassenden Textes und besonders bevorzugt wenigstens einer Textzeile Koordinaten zugeordnet. Bevorzugt wird dabei mindestens eine Textzeile in dem erfassten Dokument identifiziert. Dabei ist es möglich, dem Anfang und dem Ende einer bestimmten Zeile, beispielsweise einer i-ten Zeile Punkte in einer bestimmten Ebene zum Beispiel der Ebene der Vorlage zuzuordnen. Diese Punkte können dabei manuell durch den Anwender oder auch automatisch durch ein Programm platziert werden. Weiterhin können dem Anfangs- und dem Endpunkt wenigstens einer Zeile Koordinaten zugeordnet werden. Vorteilhaft werden mehreren Zeilen des zu erfassenden Dokumentes entsprechende Koordinaten zugeordnet.

Aus diesen Werten bzw. den bestimmten Punkten kann der Benutzer bzw. Leser der Vorlage mit der ermittelten Zeile geführt werden. Auf Basis der ermittelten Daten kann beispielsweise eine Gerade definiert werden, welche sich aus den beiden Punkten und einem bestimmten geraden Abschnitt ergibt. Dabei kann sich die Gerade wie folgt darstellen:

$$g\,(s) = p_{s,i} + s\,{}^{*}(p_{e,i} - p_{s,i})$$

Dabei bezeichnet $p_{s,i}$ einen ersten ermittelten Punkt der Zeile und das Bezugszeichen $p_{e,i}$ einen zweiten Punkt der betreffenden Zeile. s bezeichnet eine natürliche Koordinate, deren Wert zwischen 0 und 1 liegen kann. Auf diese Weise wird keine Gerade, sondern eine Linie definiert. Die Bewegung eines bestimmten Ankerpunkts des anzuzeigenden Bildausschnitts kann mit der besagten Linie g und bevorzugt senkrecht zu dieser Linie g jedoch eingeschränkt für den Anwender möglich sein. Dies ist beispielsweise möglich, indem die Gerade g mit dem betreffenden Ankerpunkt mit einem vorgegebenen, bevorzugt jedoch konstanten Versatz gekoppelt wird. Dabei gilt:

$$p_a\,(s) = g\,(s) + v.$$

Dies bedeutet, dass auch eine Bewegung des zu bewegenden Bildabschnittes innerhalb einer vorgegebenen Toleranz ermöglicht sein kann. Der Anwender gibt über eine Mensch-Maschine-Schnittstelle damit bevorzugt ausschließlich die Koordinate s vor, um den Bildausschnitt zu verschieben.

Diese hier beschriebene Kopplung kann auch weicher erfolgen. Beispielsweise kann eine Bewegung senkrecht zu der genannten geraden Linie eine stärkere Eingabe an der Schnittstelle bzw. mittels der Eingabeeinrichtung erfordern. Auf diese Weise kann es dem Benutzer ermöglicht werden, beispielsweise willentlich in eine andere Zeile des Dokuments zu springen. Daneben können auch Mechanismen vorgesehen sein, die automatisch eine Rückkehr zu einer bestimmten Zeile bzw. einer bestimmten Gerade ermöglichen. So wäre es beispielsweise möglich, dass der Benutzer zwar bei einer bestimmten Bewegung kurzzeitig eine Zeile verlassen kann, jedoch nach einer bestimmten Zeit wieder zu der besagten Zeile zurückgeführt wird. Dabei wäre es beispielsweise möglich, dass ein virtuelles Kraftgesetz zwischen g und dem Ankerpunkt definiert wird, beispielsweise durch ein Federdämpferelement eine Kraft bestimmt wird, die einen mit einer virtuellen Masse behafteten Bildausschnitt zu einer Zeilenlinie zurückführt.

In den oben erwähnten Koordinaten, mit deren Hilfe die Linie festgelegt wird, kann es sich um absolute Koordinaten handeln, welche beispielsweise bezüglich eines Ursprungs eines Koordinatensystems gewählt werden. Daneben kann es sich jedoch auch um relative Koordinaten handeln, die bezüglich eines vorgegebenen Fixpunktes des Dokuments bestimmt werden.

Bei einem weiteren vorteilhaften Verfahren wird wenigstens zeitweise der von der Bildwiedergabeeinrichtung wiedergegebene Bildabschnitt zumindest auch in der zu der ersten Richtung senkrecht stehenden zweiten Richtung verschoben. Dies kann insbesondere zum Verschieben, bzw. Betrachten einer weiteren Zeile des zu erfassenden Dokuments hilfreich sein.

Dabei ist es möglich, dass bei Erreichen eines Endes wenigstens einer Zeile der wiedergegebene Abschnitt auf einen Anfangspunkt auf einer auf diese Zeile folgenden Zeile gesetzt wird. Dieses Umsetzen auf den Anfangspunkt kann dabei automatisch erfolgen, wenn erkannt wird, dass der Benutzer nunmehr eine Zeile zu Ende gelesen hat, es wäre jedoch auch möglich, dass das Versetzen auf eine insbesondere nachfolgende Zeile durch eine Benutzereingabe, beispielsweise eine Betätigung einer Maustaste, erfolgt.

Für den Übergang von einer bestimmten Zeile zu einer folgenden oder auch vorausgehenden Zeile sind mehrere Vorgehensweisen denkbar. So wäre es denkbar, dass die Vorlage bzw. der Verlauf der Textzeilen der Vorlage durch die besagten Koordinaten in dem gesamten Dokument oder auch durch die oben erwähnten relativen Koordinaten mittels Auswerten eines erfassten Bildabschnitts definiert werden. Diese Zeilen werden dann bevorzugt in absoluten Koordinaten durch mindestens zwei Punkte definiert und der Verlauf zwischen diesen beiden Punkten interpoliert. Die Identifizierung dieser Punkte kann dabei automatisch oder manuell erfolgen. Vorteilhaft erfolgt die Identifizierung automatisch. Der relative Verlauf von Textzeilen innerhalb des Dokuments wird bevorzugt automatisch erkannt.

Der anzuzeigende Bildausschnitt wird entlang einer Zeile geführt. Dabei kann, wie oben erwähnt, die feste Kopplung vorgenommen werden, es wäre jedoch auch denkbar, dass die Zeilenrichtung bei dem Verschieben des anzuzeigenden Bildausschnitts durch den Anwender bevorzugt wird. Auf diese Weise wäre auch ein Abweichen möglich, dies jedoch bevorzugt derart eingestellt, dass sichergestellt wird, dass es auf einem konkreten entsprechenden Willen des Benutzers basiert.

Weiterhin erfolgt bevorzugt ein automatisches Zurückführen auf die Zeile, falls eine Ausschnittsbewegung des Anwenders von dieser abweicht.

Bei einem weiteren bevorzugten Verfahren wird wenigstens ein Bildabschnitt von der Bildwiedergabeeinrichtung vergrößert wiedergegeben. Dabei wird unter einer Vergrößerung insbesondere eine Vergrößerung gegenüber dem einzulesenden Dokument selbst verstanden. Vorteilhaft erfolgt dabei eine Vergrößerung wenigstens um den Faktor 2, bevorzugt wenigstens um den Faktor 4.

Bei einem weiteren bevorzugten Verfahren wird zusätzlich zu dem wiedergegebenen Bildabschnitt wenigstens zeitweise ein Markierungselement mit der Wiedergabeeinrichtung ausgegeben. So ist es möglich, dass beispielsweise Zeilen oder auch Hilfszeilen oder Pfeile angegeben bzw. angezeigt werden. Diese Zeilen erleichtern dabei dem Benutzer ein Verbleiben in der für ihn gerade maßgeblichen Zeile. Entsprechende Pfeile können darauf hinweisen, in welche Richtung der Benutzer das Eingabemittel bewegen muss, um zu der gewünschten Passage zurückzukehren.

Es ist damit hier eine optische Unterstützung auch des Wiederauffindens einer Zeile, insbesondere durch Navigationshinweise, vorgeschlagen. So können beispielsweise Pfeile in Richtung der Zeile angezeigt werden oder die besagten Hilfslinien, die an der Zeile fixiert sind. Auch ist es möglich, dass derartige Markierungen den Benutzer beim Auffinden des Zeilenanfangs einer weiteren, beispielsweise einer nachfolgenden Zeile unterstützen. So können beispielsweise Pfeile den Benutzer darauf hinweisen, wo der Zeilenanfang der darauffolgenden Zeile zu finden ist. Auch wäre es möglich, dass eine gerade gelesene Zeile mittels optischer Mittel hervorgehoben wird, beispielsweise indem die Texte benachbarter Zeilen nur blass dargestellt werden.

Bevorzugt sind mehrere Zeilen des Textdokuments bekannt und/oder markiert und besonders bevorzugt alle letztlich zu lesenden oder zu erfassenden Zeilen. Um dem Anwender bei der Bewegung von einem Ankerpunkt zum Anfang der nachfolgenden Zeile unterstützen zu können, ist vorteilhaft diese besagte weitere Zeile j = i + 1 bekannt. Nun kann der Anwender auf verschiedene Arten an den Anfang der jeweiligen j-ten Zeile geleitet werden.

Bei einem vorteilhaften Verfahren wäre es möglich, dass der Bildausschnitt an einer bestimmten Zeile i angeheftet bleibt, bis anzuzeigender Bildausschnitt durch den Anwender als Anfang der Zeile i ausgewählt wurde. Anschließend werden, beispielsweise bei Erreichen des Endes einer Zeile, nur Versatzwünsche senkrecht zu der Geraden bzw. zum Verlauf der Zeile angenommen, bis eine neue Zeile erreicht wurde. Diese neue Zeile kann beispielsweise die j-te Zeile sein. Dann schaltet das System wieder in einen Zeilenlesemodus, in dem die Verschiebung entlang einer Zeile erfolgt.

Auch kann das Ende einer i-ten Zeile durch eine Eingabe des Anwenders gekennzeichnet sein, beispielsweise, indem durch die Eingabe des Anwenders ein Zeilensprung angestoßen wird. In diesem Falle springt der anzufallende Ausschnitt an den Anfang der nachfolgenden Zeile j. Daneben kann auch der Wunsch nach einem Zeilensprung von dem System erkannt werden, sodass beispielsweise am Ende einer bestimmten Zeile automatisch zum Anfang der nächsten Zeile gesprungen wird. Dies ist dadurch möglich, dass beispielsweise das System erkennt, dass in einer bestimmten Zeile kein Text mehr zu finden ist, es ist jedoch auch möglich, dass bereits beim Einlesen des Dokuments die jeweiligen Koordinaten sämtlicher Zeilen bestimmt sind und bei Erreichen einer bestimmten Endkoordinate automatisch die nächste Zeile angewählt wird.

Es wird jedoch darauf hingewiesen, dass auf das Einlesen von Texten verzichtet werden kann und unmittelbar von bereits zur Verfügung stehenden Dateien ausgegangen wird, welche die jeweilige Textinformation enthalten. Dabei könnten diese Textdokumente beispielsweise aus dem Internet heruntergeladen werden. So könnten die zu lesenden Texte auch beispielsweise von einer Online-Bibliothek zur Verfügung gestellt werden. Auch müßte das Einlesen der Dokumente nicht in zeitlichem oder örtlichem Zusammenhang mit der Wiedergabe erfolgen.

Die vorliegende Erfindung ist weiterhin auf eine Vorrichtung zum Erfassen von Text enthaltenden Dokumenten gerichtet. Diese Vorrichtung weist eine Bildaufnahmeeinrichtung auf, welche geeignet und bestimmt ist, wenigstens einen Abschnitt eines zu erfassenden Dokuments aufzunehmen, eine Speichereinrichtung, welche geeignet und bestimmt ist, Daten abzuspeichern, welche für den erfassten Abschnitt des Dokuments charakteristisch sind, und eine Wiedergabeeinrichtung, welche zur Wiedergabe wenigstens eines Unterabschnitts des erfassten Abschnitts geeignet und bestimmt ist und mit einer durch einen Benutzer zu betätigenden Eingabeeinrichtung wobei durch eine Betätigung dieser Eingabeeinrichtung der auf der Bildwiedergabeeinrichtung wiedergegebene Unterabschnitt ebenfalls bewegbar ist, derart, dass weitere Unterabschnitte des erfassten Abschnitts auf der Bildwiedergabeeinrichtung ausgegeben werden, wobei diese Bewegung des Unterabschnitts von einer mittels der Eingabeeinrichtung durch einen Benutzer eingegebenen Relativbewegung steuerbar ist und wobei diese Relativbewegung eine erste Komponente aufweist die sich bevorzugt entlang des zu erfassenden Textes erstreckt sowie eine zweite Komponente, welche zu der ersten Komponente senkrecht steht.

Erfindungsgemäß ist wenigstens zeitweise der von der Bildwiedergabeeinrichtung wiedergegebene Unterabschnitt unabhängig von der zweiten Komponente der Relativbewegung verschiebbar und/oder wenigstens zeitweise der von der Bildwiedergabeeinrichtung wiedergegebene Bildabschnitt unabhängig von einer Richtung der Relativbewegung der Eingabeeinrichtung im Wesentlichen nur in einer ersten geraden Richtung verschiebbar.

Es wird daher auch vorrichtungsseitig vorgeschlagen, dass der Benutzer, insbesondere auch teilweise unabhängig von der Bewegung des Eingabemittels entlang der vorgegebenen Information geführt wird bzw. führbar ist.

Weitere Vorteile und Ausführungsformen ergeben sich aus den beigefügten Zeichnungen. Darin zeigen:

Fig. 1      eine Darstellung zur Veranschaulichung einer Vorgehensweise nach dem Stand der Technik;

Fig. 2      eine Veranschaulichung eines erfindungsgemäßen Verfahrens;

Fig. 3      eine Darstellung zur Wiedergabe eines Textdokuments;

Fig. 4      eine weitere Darstellung zur Veranschaulichung der Wiedergabe eines Textdokuments;

Fig. 5      eine Darstellung zur Veranschaulichung einer Orientierungshilfe;

Fig. 6      eine weitere Darstellung zur Veranschaulichung des erfindungsgemäßen Verfahrens; und

Fig. 7 - 11　　fünf Darstellungen zur Veranschaulichung einer Linienführung.

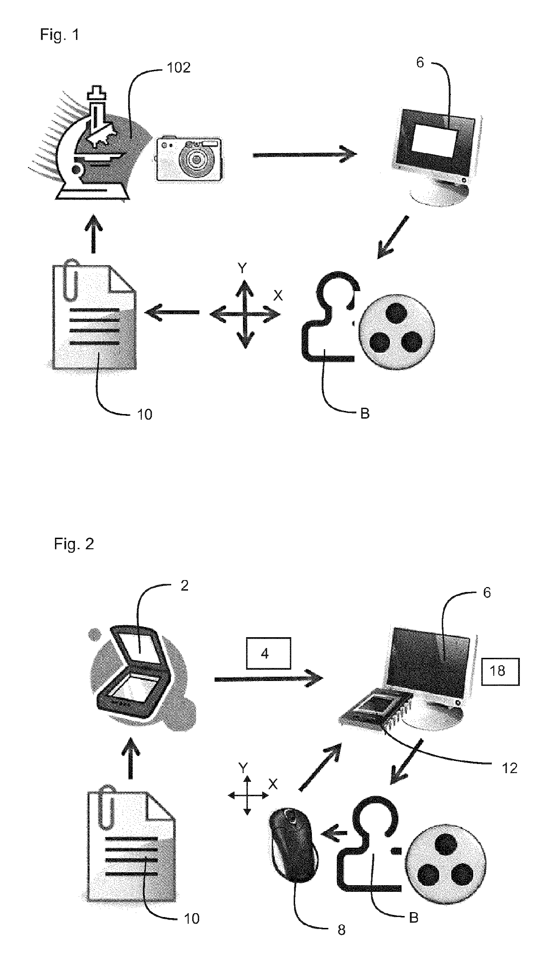

Figur 1 zeigt eine schematische Darstellung eines Verfahrens zum Lesen von Dokumenten nach dem Stand der Technik. Hier ist Ausganspunkt ein Text enthaltendes Dokument 10. Dieses wird mittels einer schematisch dargestellten Bildaufnahmeeinrichtung, wie einer Kamera, beobachtet und auf einem Bildschirm 6 wiedergegeben. Durch Verschieben des Dokuments gegenüber der Bildaufnahmeeinrichtung in den gezeigten Richtungen X und Y kann auch der am Bildschirm wiedergegebene Abschnitt verschoben werden. Dabei ist jedoch nicht sichergestellt, dass der Benutzer B hier die Verschiebung innerhalb einer exakten Richtung vornimmt, so dass ein Verrutschen in unterschiedliche Zeilen durchaus möglich ist.

Figur 2 veranschaulicht schematisch ein erfindungsgemäßes Verfahren. Ausgangspunkt ist wieder ein Text enthaltendes Dokument 10, welches hier jedoch zunächst mittels einer Bildaufnahmeeinrichtung, wie etwa einem Scanner, aufgenommen wird und in einer Speichereinrichtung 4 als solches zwischengespeichert wird. Auch hier ist es wiederum möglich, dass dieses Dokument an einem Bildschirm 6 ausgegeben wird, wobei jedoch eine Steuerungseinrichtung 12 vorgesehen ist, welche - wie in oben beschriebener Weise - bewirkt, dass beispielsweise eine bestimmte Zeile des Textes beibehalten wird. Das Bezugszeichen 8 kennzeichnet eine Eingabeeinrichtung wie beispielsweise eine Computermaus, welche von dem Benutzer B bewegt werden kann, um den dargestellten Unterabschnitt des Textes auf der Bildwiedergabeeinrichtung 6 wiederzugeben.

Dabei kann die Eingabeeinrichtung bevorzugt mit der Steuerungseinrichtung 12 interagieren. Dabei können die Bewegungen der Eingabeeinrichtung als Eingangsbefehle für die Steuerungseinrichtung dienen und diese kann dabei beispielsweise nur die Bewegungen in einer Richtung berücksichtigen und Bewegungen in der hierzu senkrechten Richtung unterdrücken oder nur in bestimmten Grenzen ausgeben. Weiterhin verarbeitet die Steuerungseinrichtung jedoch auch Informationen aus dem eingelesenen Dokument 10, etwa eine Länge der jeweiligen Zeilen, einen Abstand benachbarter Zeilen, eine Schriftgröße etc.

Daneben kann die Steuerungseinrichtung 12 auch bewirken, dass in die Bildwiedergabeeinrichtung 6 neben dem Text auch zusätzliche Markierungen wie etwa Hilfszeilen ausgibt. Dabei werden diese Markierungen bevorzugt zumindest teilweise an den Verlauf der Zeilen des Textdokumentes angepasst. Das Bezugszeichen 18 kennzeichnet grob schematisch eine Markierungsdarstellungseinrichtung, welche geeignet und dazu bestimmt ist, zusätzlich zu dem darzustellenden Text auch eine Markierung darzustellen wie etwa eine Zeile.

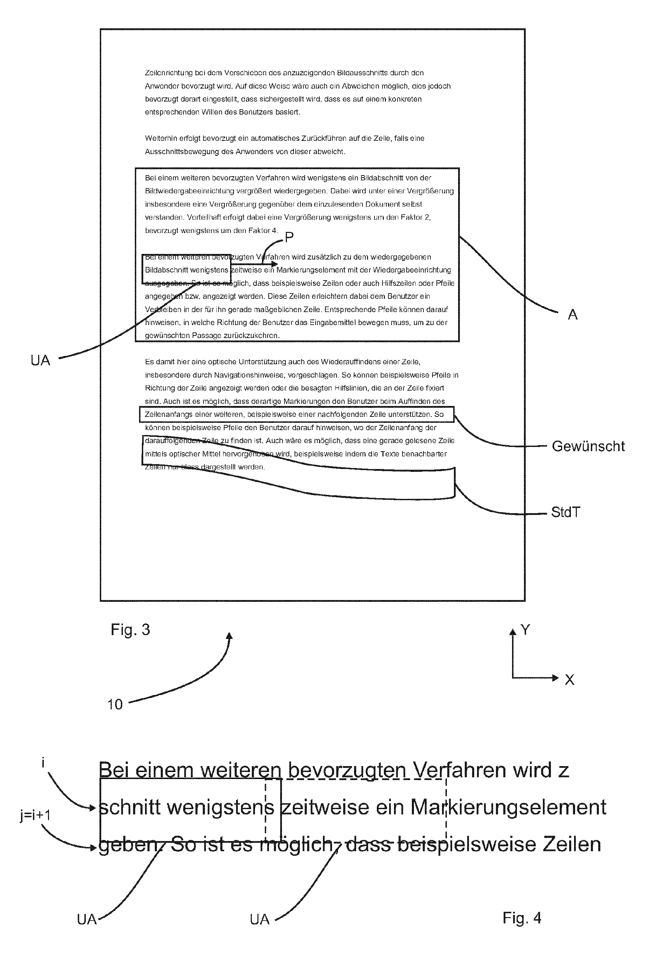

Figur 3 zeigt eine Darstellung eines Dokuments 10. Dabei nimmt die Bildaufnahmeeinrichtung zunächst einen Abschnitt A dieses Dokuments auf. Es ist dabei auch möglich und bevorzugt, den vollständigen wie in Figur 3 gezeigten Text aufzunehmen und abzuspeichern. Auch könnten zunächst, insbesondere in einem Einlesemodus, mehrere Seiten eines Textes eingelesen und abgespeichert werden. Auch könnten mehrere Seiten unterschiedlicher Dokumente eingelesen und eingespeichert werden, wobei es bevorzugt möglich ist, unterschiedliche Dokumente in unterschiedlicher Art und Weise aufzubereiten.

Auf dem Bildschirm kann ein Unterabschnitt UA dieses Dokuments dargestellt werden, wobei durch eine Verschiebung der Maus auch das Rechteck, welches den Abschnitt UA darstellt, in Richtung des Pfeils P verschoben werden kann und somit auch der wiedergegebene Bereich. Im Stand der Technik, wie durch das untere gekrümmte Viereck veranschaulicht, kann es dazu kommen, dass der Benutzer durch seine Bewegung mit der Maus innerhalb der Textzeilen verrutscht, so dass das Auslesen des Textes schwieriger wird. Das höhere Rechteck, welches genau entlang der Zeile verläuft, ist das gewünscht Resultat, welches durch die Erfindung erreicht wird.

Figur 4 zeigt eine Darstellung des Unterabschnittes sowie eine Zeile i sowie eine darauffolgende j=i+1. Durch die Bewegung der Eingabeeinrichtung unter der Maus kann der Unterabschnitt genau in Richtung der Zeile verschoben werden, selbst wenn der Benutzer mit der Eingabeeinrichtung andere Bewegung, d.h. auch senkrecht zu der Richtung P liegende Komponenten mit der Eingabeeinrichtung eingibt.

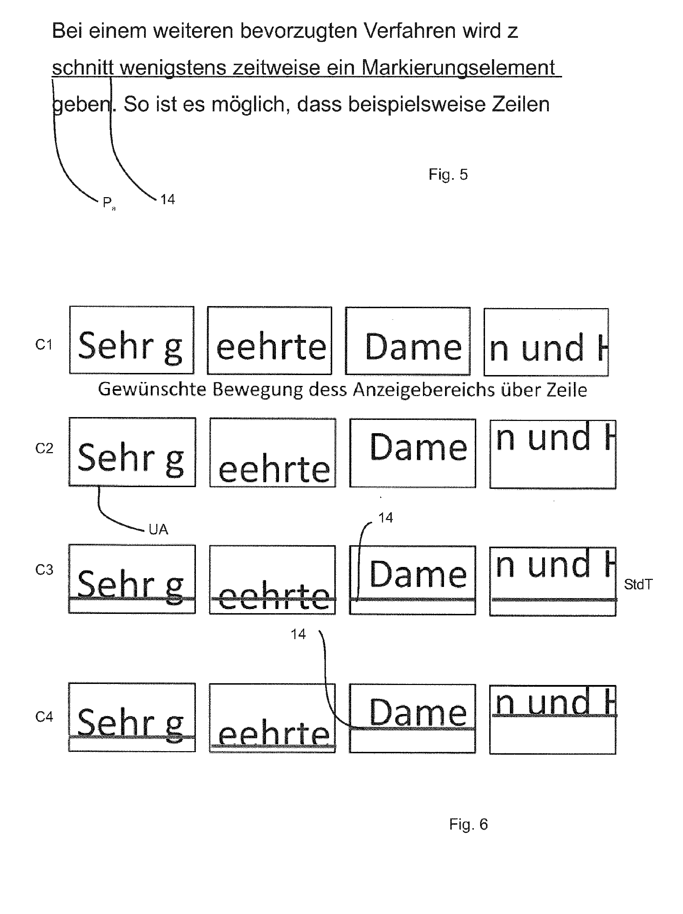

Bei der in Figur 5 gezeigten Darstellung wird in einem eingelesenen Dokument eine Zeile 14 definiert. Dabei ist es möglich, dass diese Zeile lediglich systemintern eingebracht wird, es ist jedoch auch möglich, dass die Zeile tatsächlich auf dem Bildschirm ausgegeben wird, um dem Benutzer die Orientierung zu erleichtern. Der Punkt $P_a$ kennzeichnet einen Anfangspunkt dieser Zeile. Diese Zeilen 14 können dabei in absoluten Koordinaten durch mindestens zwei Punkte definiert werden, wobei der Verlauf zwischen diesen Punkten bevorzugt interpoliert werden kann. Dabei ist es möglich, dass diese beiden Punkte automatisch oder manuell identifiziert werden. So kann es sich bei dem ersten Punkt beispielsweise um den Punkt $P_A$, d.h. den Anfangspunkt der Zeile handeln und bei dem zweiten Punkt um einen Endpunkt (nicht dargestellt). Bevorzugt wird ein relativer Verlauf von Textzeilen innerhalb des Dokuments automatisch erkannt. Diese Zeile 14 stellt damit auch die oben erwähnte Markierung dar, welche gemeinsam mit dem Text dargestellt wird. Bevorzugt wird eine Vielzahl von Zeilen gemeinsam mit dem Text dargestellt. Auch wäre es möglich, dass lediglich in dem Bereich, der gerade von einem Benutzer gelesen wird, eine entsprechende Zeile dargestellt wird.

Wie oben erwähnt, wird der anzuzeigende Bildausschnitt $U_A$ entlang einer Zeile geführt. Dies kann, wie oben erwähnt, beispielsweise durch eine feste Kopplung an eine Bewegung der Eingabeeinrichtung geschehen. Dabei kann, wie oben erwähnt, genau die Zeilenrichtung bei dem Verschieben des anzuzeigenden Bildabschnittes durch den Benutzer bevorzugt werden bzw. die hierzu senkrechten Richtungen können unterdrückt werden.

Weiterhin ist es möglich, dass der Unterabschnitt $U_A$ bei Erreichen eines Endes der Zeile von dieser abweicht und beispielsweise zum Anfang der nächsten Zeile springt. Auch dies ist wiederum möglich, wenn die Anfangs- und Endpunkte der einzelnen Zeilen definiert sind.

Daneben können auch zusätzliche Navigationshinweise an den Benutzer ausgegeben werden, wie etwa ein Pfeil 15, der dem Benutzer anzeigt, dass er nunmehr in die nächste Zeile springen kann. Derartige Navigationshinweise können z.B. Pfeile in Richtung der Zeile sein oder auch das Einblenden einer Hilfslinie, die an der Zeile fixiert ist. Auf diese Weise wird der Benutzer beim Auffinden des nächsten Zeilenfangs unterstützt.

Figur 6 zeigt eine Darstellung einer möglichen Ausgestaltung der Erfindung. In der ersten Zeile C1 wird dabei das gewünschte Ergebnis gezeigt, wobei durch eine Bewegung der Eingabeeinrichtung der Unterabschnitt jeweils exakt entlang einer Zeile geführt wird. Die zweite Darstellung C2 zeigt ein Abweichen, welches durch Bewegungen der Eingabeeinrichtung entstehen kann. Falls im Stand der Technik Hilfszeilen definiert sein sollten, würden diese jeweils auf der gleichen Höhe bleiben und damit das in der Zeile C3 dargestellte Ergebnis erreichen, d.h. die Hilfszeile wäre einmal unterhalb des Textes, einmal durch den Text und einmal weit unterhalb des Textes dargestellt. Auf diese Weise wird der Benutzer jedoch bei der Wiedergabe des Dokuments eher behindert.

Bei der letzten in Zeile C4 dargestellten Vorgehensweise wird in einer weiteren Ausführungsform der Erfindung vorgeschlagen, dass die Zeile ebenfalls bewegt wird, d.h. beispielsweise in Abhängigkeit einer Bewegung der Eingabeeinrichtung mit dem eingelesenen Text verschoben wird. Auf diese Weise bleibt die Zeile stets unterhalb des zu erkennenden Textes und für den Benutzer ist daher ein Auslesen der Informationen einfacher.

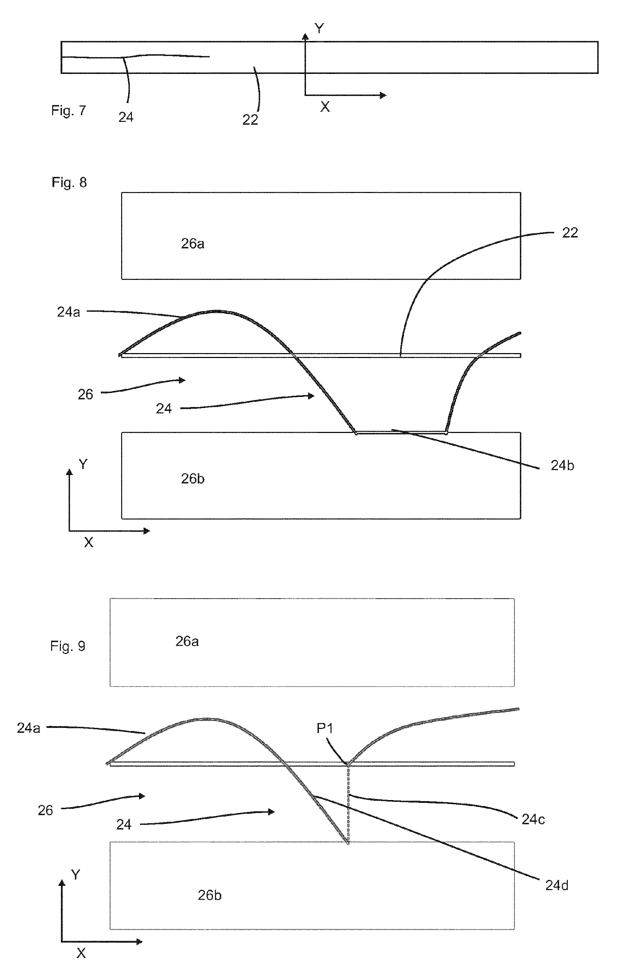

Dig. Fig. 7 - 11 zeigen mehrere Ausgestaltungen einer Linienführung. Dabei bezieht sich das Bezugszeichen 22 jeweils auf eine zu lesende Textzeile und das Bezugszeichen 24 auf die tatsächlich auf dem Bildschirm wiedergegebene Führung des zu lesenden Textes bzw. die auf der Anzeigeeinrichtung durchgeführte Fortbewegung des Textes.

Bei der in Fig. 7 gezeigten Darstellung wird eine harte Kopplung an die Textzeile vorgenommen. Dies bedeutet, dass unabhängig von einer etwaigen Bewegung der Eingabeeinrichtung auch in der Richtung y der angezeigte Bildabschnitt nur entlang der Textzeile 22 verschoben wird.

Bei der in Fig. 8 gezeigten Variante wird durch Begrenzungen 26a, 26b ein Toleranzkorridor 26 definiert. Innerhalb dieses Toleranzkorridors wird die Bewegung des Eingabemittels sowohl in der Richtung x als auch in der Richtung y zugelassen bzw. unmittelbar auf dem Bildschirm bzw. in der Bildschirmführung wiedergegeben. Dies wird durch den Abschnitt 24a der Führung 24 veranschaulicht. Sobald der Toleranzbereich 26 verlassen werden würde, wird auch die weitere Bewegung in der Richtung y des Eingabemittels ignoriert und nur noch in der Richtung x verschoben, wie durch den Abschnitt 24b gezeigt.

Bei der in Fig. 9 gezeigten Darstellung findet, sobald der Toleranzbereich verlassen werden würde, eine Rückführung auf die Textzeile 22 statt. Dabei wird hier davon ausgegangen, dass in dem Bereich 24d noch ein ordnungsgemäßes Lesen des Textes möglich war und es wird an eine Position P1 rückgeführt, welche einer Fortsetzung des Abschnitts 24d, jedoch auf der Textzeile entsprechen würde.

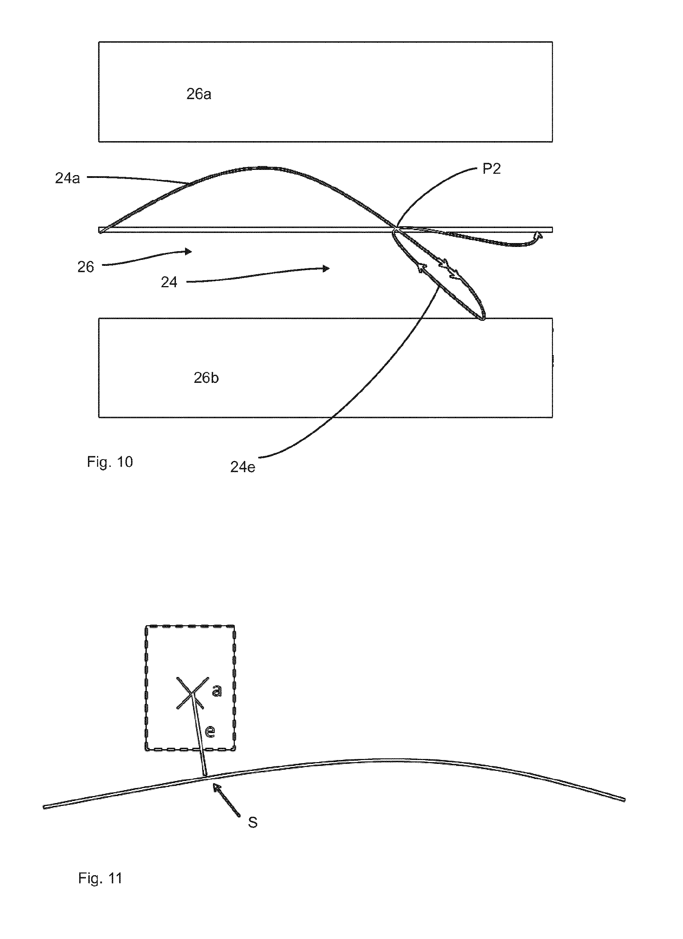

Bei der in Fig. 10 gezeigten Darstellung findet (in dem Abschnitt 24e) eine Rückführung auf einen Punkt P2 statt, an dem die Textzeile ursprünglich verlassen wurde. Sowohl bei der in Fig. 9 gezeigten Darstellung als auch bei der in Fig. 10 gezeigten Darstellung erfolgen die Rückführung, sobald der Toleranzbereich verlassen werden würde.

Unter Bezugnahme auf Fig. 11 wird nochmals eine erfindungsgemäße Vorgehensweise veranschaulicht:

Ausgegangen wird dabei von natürlichen Informationskoordinaten, wobei s In Informationsrichtung verläuft und e senkrecht dazu.

Es erfolgt eine mehrdimensionale Benutzereingabe. Der Anzeigebereich liegt an der Position a in der Dokumentenebene, die Entfernung zum Informationsverlauf e steht senkrecht, beispielsweise senkrecht auf dem Informationsverlauf. Allgemein gilt, dass die Information aufnehmbar ist wenn e klein ist.

Eine Bewegung des Anzeigeausschnitts über die Dokumentenebene durch: ds_=_f1 (du)_ beziehungsweise ds = f1 (u). Die Bewegung des Anzeigeabschnitts wird derart aus a, e, du bzw. u und der Zeit t bestimmt, dass der Anwender unterstützt wird, insbesondere in dem erreicht wird, dass der Betrag von e kleiner ist als ein vorgegebener Toleranzbereich. Dies wird beispielsweise durch eine Funktion de= f2(du, e, t) erreicht.
_

Bei einer zweiten Variante wird die Aufnehmbarkeit der Darstellung durch eine Rückführung auf den Informationsfluss erreicht, wie oben gezeigt. Auch können die beiden gezeigten Varianten miteinander kombiniert werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

**Bezugszeichenliste**

| | |
|---|---|
| 2 | Bildaufnahmeeinrichtung |
| 4 | Speichereinrichtung |
| 6 | Wiedergabeeinrichtung |
| 8 | Eingabeeinrichtung |
| 10 | Text enthaltendes Dokument |
| 12 | Steuerungseinrichtung |
| 14 | Zeile, Markierung |
| 15 | Pfeil |
| 22 | Textzeile |
| 24 | Verlauf der Bildschirmwiedergabe |
| 24a - 24e | Abschnitte des Verlaufs |
| 26 | Toleranzkorridor |
| 26a,b | Begrenzungen des Toleranzkorridors |
| | |
| A | Abschnitt des Text enthaltenden Dokuments |
| UA | Unterabschnitt des Abschnitts |
| B | Benutzer |
| X,Y | Richtungen |
| $P_A$ | Anfangspunkt einer Zeile |
| C1-C4 | Zeilendarstellungen |

**Patentansprüche**

**1.** Verfahren zur Erfassung von Text enthaltenden Dokumenten mit den Schritten:

- Aufnehmen wenigstens eines Abschnitts (A) eines zu Er fassenden Dokuments mit einer Bildaufnahmeeinrichtung (2) oder zur-Verfügungstellen wenigstens eines solchen Abschnitts;
- Abspeichern von Daten, welche für den erfassten Abschnitt des Dokuments charakteristisch sind, in einer Speichereinrichtung (4);
- Wiedergabe wenigstens eines Unterabschnitts (UA) des erfassten Abschnitts (A) auf einer Bildwiedergabeeinrichtung (6);
- Bewegen des auf der Bildwiedergabeeinrichtung (6) wiedergegebenen Unterabschnitts (UA) in Reaktion auf eine Eingabe eines Benutzers, derart, dass weitere Unterabschnitte (UA) des erfassten Abschnitts auf der Bildwiedergabeeinrichtung (6) ausgegeben werden, wobei diese Bewegung des Unterabschnitts in Abhängigkeit von einer von dem Benutzer mittels einer Eingabeeinrichtung (8) eingegebenen Relativbewegung gesteuert wird; wobei diese Relativbewegung eine erste Komponente (X) aufweist die sich entlang des zu erfassenden Textes er streckt sowie eine zweite Komponente (Y), welche zu der ersten Komponente senkrecht steht

**dadurch gekennzeichnet, dass**
wenigstens zeitweise der von der Bildwiedergabeeinrichtung wiedergegebene Unterabschnitt (UA) unabhängig von der zweiten Komponente (Y) der Relativbewegung verschoben wird und/oder von der zweiten Komponente (Y) der Relativbewegung entkoppelt wird.

**2.** Verfahren nach Anspruch 1,
**dadurch gekennzeichnet, dass**
wenigstens zeitweise der von der Bildwiedergabeeinrichtung wiedergegebene Unterabschnitt (UA) ausschließlich entlang des zu erfassenden Textes (X) verschoben wird.

**3.** Verfahren nach Anspruch 1,
**dadurch gekennzeichnet, dass**
der von der Bildwiedergabeeinrichtung wiedergegebene Unterabschnitt innerhalb eines rechteckigen Bereichs verschoben wird, dessen lange Seite sich in Richtung des zu erfassenden Textes erstreckt.

**4.** Verfahren nach Anspruch 1,
**dadurch gekennzeichnet, dass**
wenigstens zeitweise der von der Bildwiedergabeeinrichtung wiedergegebene Unterabschnitt (UA) ausschließlich entlang einer geraden Linie verschoben wird.

**5.** Verfahren nach wenigstens einem der vorangegangenen Ansprüche,
**dadurch gekennzeichnet, dass**
sich die Bewegung die Bewegung des Bildabschnitts aus der Komponente (X) der Relativbewegung ergibt.

**6.** Verfahren nach wenigstens einem der vorangegangenen Ansprüche,
**dadurch gekennzeichnet, dass**
eine Prozessoreinrichtung (12) wenigstens eine Textzeile des erfassten Abschnitts bestimmt.

**7.** Verfahren nach Anspruch 6,
**dadurch gekennzeichnet, dass**
wenigstens einer Textzeile des Dokuments Koordinaten zugeordnet werden.

**8.** Verfahren nach wenigstens einem der vorangegangenen Ansprüche,
**dadurch gekennzeichnet, dass**
wenigstens zeitweise der von der Bildwiedergabeeinrichtung wiedergegebene Bildabschnitt zumindest auch in der einer zu der ersten Richtung (X) senkrecht stehenden zweiten Richtung wiedergegeben wird.

**9.** Verfahren nach wenigstens einem der vorangegangenen Ansprüche,
**dadurch gekennzeichnet, dass**
wenigstens ein Bildabschnitt von der Bildwiedergabeeinrichtung vergrößert wiedergegeben wird.

10. Verfahren nach wenigstens einem der vorangegangenen Ansprüche,
**dadurch gekennzeichnet, dass**
bei Erreichen eines Endes wenigstens einer Zeile (i) der wiedergegebene Abschnitt auf einen Anfangspunkt einer auf diese Zeile (i) folgenden Zeile (j=i+1) gesetzt wird.

11. Verfahren nach wenigstens einem der vorangegangenen Ansprüche,
**dadurch gekennzeichnet, dass**
zusätzlich zu dem wiedergegebenen Bildabschnitt wenigstens zeitweise ein Markierungselement mit der Wiedergabeeinrichtung ausgegeben wird.

12. Vorrichtung zum Erfassen von Text enthaltenden Dokumenten (10) mit einer Bildaufnahmeeinrichtung (2), welche geeignet und bestimmt ist, wenigstens einen Abschnitt (A) eines zu erfassenden Dokuments aufzunehmen, einer Speichereinrichtung (4), welche geeignet und bestimmt ist, Daten abzuspeichern, welche für den erfassten Abschnitt des Dokuments charakteristisch ist, und einer Wiedergabeeinrichtung (6), welche zur Wiedergabe wenigstens eines Unterabschnitts (UA) des erfassten Abschnitts (A) geeignet und bestimmt ist und mit einer durch einen Benutzer betätigbaren Eingabeeinrichtung (8) wobei durch ein Betätigung dieser Eingabeeinrichtung (8) der auf der Bildwiedergabeeinrichtung (6) wiedergegebene Unterabschnitt (UA) ebenfalls bewegbar ist, derart, dass weitere Unterabschnitte (UA) des erfassten Abschnitts auf der Bildwiedergabeeinrichtung (6) ausgegeben werden. wobei diese Bewegung des Unterabschnitts von einer mittels der Eingabeeinrichtung (8) durch einen Benutzer (B) eingegebenen Relativbewegung steuerbar ist und wobei diese Relativbewegung eine erste Komponente (X) aufweist die sich entlang des zu erfassenden Textes erstreckt sowie eine zweite Komponente (Y), welche zu der ersten Komponente senkrecht steht,
**dadurch gekennzeichnet, dass**
wenigstens zeitweise der von der Bildwiedergabeeinrichtung (6) wiedergegebene Unterabschnitt (UA) unabhängig von der zweiten Komponente (Y) der Relativbewegung verschoben wird und/oder wenigstens zeitweise der von der Bildwiedergabeeinrichtung (6) wiedergegebene Bildabschnitt unabhängig von einer Richtung der Relativbewegung der Eingabeeinrichtung (8) im Wesentlichen nur in einer ersten geraden Richtung verschiebbar ist.

EP 2 930 708 A2

Fig. 1

102

6

Y

X

10

B

Fig. 2

2

6

4

18

Y

X

12

10

8

B

12

Zeilenrichtung bei dem Verschieben des anzuzeigenden Bildausschnitts durch den Anwender bevorzugt wird. Auf diese Weise wäre auch ein Abweichen möglich, dies jedoch bevorzugt derart eingestellt, dass sichergestellt wird, dass es auf einem konkreten entsprechenden Willen des Benutzers basiert.

Weiterhin erfolgt bevorzugt ein automatisches Zurückführen auf die Zeile, falls eine Ausschnittsbewegung des Anwenders von dieser abweicht.

Bei einem weiteren bevorzugten Verfahren wird wenigstens ein Bildabschnitt von der Bildwiedergabeeinrichtung vergrößert wiedergegeben. Dabei wird unter einer Vergrößerung insbesondere eine Vergrößerung gegenüber dem einzulesenden Dokument selbst verstanden. Vorteilhaft erfolgt dabei eine Vergrößerung wenigstens um den Faktor 2, bevorzugt wenigstens um den Faktor 4.

P

Bei einem weiteren bevorzugten Verfahren wird zusätzlich zu dem wiedergegebenen Bildabschnitt wenigstens zeitweise ein Markierungselement mit der Wiedergabeeinrichtung ausgegeben. So ist es möglich, dass beispielsweise Zeilen oder auch Hilfszeilen oder Pfeile angegeben bzw. angezeigt werden. Diese Zeilen erleichtern dabei dem Benutzer ein Verbleiben in der für ihn gerade maßgeblichen Zeile. Entsprechende Pfeile können darauf hinweisen, in welche Richtung der Benutzer das Eingabemittel bewegen muss, um zu der gewünschten Passage zurückzukehren.

Es damit hier eine optische Unterstützung auch des Wiederauffindens einer Zeile, insbesondere durch Navigationshinweise, vorgeschlagen. So können beispielsweise Pfeile in Richtung der Zeile angezeigt werden oder die besagten Hilfslinien, die an der Zeile fixiert sind. Auch ist es möglich, dass derartige Markierungen den Benutzer beim Auffinden des Zeilenanfangs einer weiteren, beispielsweise einer nachfolgenden Zeile unterstützen. So können beispielsweise Pfeile den Benutzer darauf hinweisen, wo der Zeilenanfang der darauffolgenden Zeile zu finden ist. Auch wäre es möglich, dass eine gerade gelesene Zeile mittels optischer Mittel hervorgehoben wird, beispielsweise indem die Texte benachbarter Zeilen nur blass dargestellt werden.

UA

A

Gewünscht

StdT

Fig. 3

10

Y

X

i

j=i+1

**Bei einem weiteren bevorzugten Ver**fahren wird z

**schnitt wenigstens** zeitweise ein Markierungselement

geben. So ist es möglich, dass beispielsweise Zeilen

UA

UA

Fig. 4

Bei einem weiteren bevorzugten Verfahren wird z

schnitt wenigstens zeitweise ein Markierungselement

geben. So ist es möglich, dass beispielsweise Zeilen

Fig. 5

$P_a$    14

C1  | Sehr g | eehrte | Dame | n und h

Gewünschte Bewegung dess Anzeigebereichs über Zeile

C2  | Sehr g | eehrte | Dame | n und h

UA    14

C3  | Sehr g | eehrte | Dame | n und h    StdT

14

C4  | Sehr g | eehrte | Dame | n und h

Fig. 6

14

Y

Fig. 7    24    22    X

Fig. 8

26a

22

24a

26

24

24b

Y
26b
X

Fig. 9    26a

24a

P1

26

24

24c

Y
26b
X

24d

26a

24a

P2

26

24

26b

Fig. 10

24e

a

e

S

Fig. 11